# EUROPEAN PATENT SPECIFICATION

(11) **EP 3 314 242 B1**
(45) Date of publication and mention of the grant of the patent: **02.12.2020**
(21) Application number: 16886754.7
(22) Date of filing: 22.01.2016
(51) Int. Cl.: B01L 3/00, G01N 15/12, G01N 15/10

(54) **MICROFLUIDIC SENSING WITH SEQUENTIAL FLUID DRIVER ACTUATION**
MIKROFLUIDISCHE MESSUNG MIT SEQUENZIELLER FLÜSSIGKEITSTREIBERBETÄTIGUNG
DÉTECTION MICROFLUIDIQUE AVEC ACTIONNEMENT SUCCESSIF DE DISPOSITIFS D'ENTRAÎNEMENT DE FLUIDE

(43) Date of publication of application: 02.05.2018
(73) Proprietor: Hewlett-Packard Development Company, L.P., Spring TX 77389 (US)
(72) Inventor: DOMINGUE, Chantelle E., Corvallis, Oregon 97330 (US); GIRI, Manish, Corvallis, Oregon 97330 (US); SMITH, Matthew David, Corvallis, Oregon 97330 (US); YU, Joshua M., Corvallis, Oregon 97330 (US); SELLS, Jeremy, Corvallis, Oregon 97330 (US); CORRIGAN, George H., Corvallis, Oregon 97330 (US)
(74) Representative: HGF
(86) International application number: PCT/US2016/014624
(87) International publication number: WO 2017/127119

(56) References cited:
- WO-A1-2014/178827
- WO-A1-2014/178827
- WO-A1-2015/116975
- US-A1- 2007 081 045
- US-A1- 2009 278 880
- US-A1- 2010 163 412
- US-A1- 2010 267 066
- US-A1- 2015 190 767
- US-A1- 2015 346 201
- US-B1- 6 398 329
- ERIK D. TORNIAINEN ET AL: "Bubble-driven inertial micropump", PHYSICS OF FLUIDS, vol. 24, no. 12, 11 December 2012 (2012-12-11), page 122003, XP055356683, US ISSN: 1070-6631, DOI: 10.1063/1.4769755

## Description

### BACKGROUND

Various sensing devices are currently available for sensing different attributes of fluid, such as blood as an example. In some instances, such sensing devices are often large, complex and expensive.

WO2014/178827A1 discloses a microfluidic device comprising a channel; a fluid inlet to pass fluid into the channel from a reservoir; a sensor disposed in the channel; and a pump actuator disposed in the channel apart from the sensor to induce fluid flow into the channel.

US6398329B1 discloses integrating a backpressure sensor into a printhead die or pen body. US2007/0081045A1 describes an inkjet printhead with multiple nozzles in each print chamber.

### BRIEF DESCRIPTION OF THE DRAWINGS

Figure 1 is a schematic diagram of an example microfluidic sensing system.
Figure 2 is a flow diagram of an example method for sensing a fluid.
Figure 3 is a graph illustrating characteristics of an example actuation of one of an example fluid driver of the system of Figure 1.
Figure 4 is a schematic diagram illustrating an example of actuation of a first fluid driver to generate a first bubble to expel fluid through a first nozzle.
Figure 5A is a schematic diagram illustrating an example of actuation of a second fluid driver to generate a second bubble to expel fluid through a second nozzle during the collapse of the first bubble of Figure 4.
Figure 5B is a schematic diagram illustrating an example of fluid being drawn across a sensing region as a result of the collapse of the first bubble of Figure 4.
Figure 6A is a schematic diagram illustrating an example of actuation of the second fluid driver to generate the third bubble to expel fluid through the first nozzle during the collapse of the second bubble of Figure 5A.
Figure 6B is a schematic diagram illustrating an example of fluid being drawn across a sensing region as a result of the collapse of the second bubble of Figure 5A.
Figure 7 is a graph illustrating an example of bubble volume changes over time during sequential actuation of fluid drivers.
Figure 8 is a sectional view illustrating a portion of an example microfluidic sensing system.
Figure 9 is a sectional view illustrating a portion of another example microfluidic sensing system.
Figure 10 is a schematic diagram of another example microfluidic sensing system.
Figure 11 is a schematic diagram of another example microfluidic sensing system.
Figure 12 is a perspective view of an example fluid testing system.
Figure 13 is a top view of an example microfluidic cassette of the testing system of Figure 12.
Figure 14 is a bottom view of the example microfluidic cassette of Figure 13.
Figure 15 is a sectional view of the example microfluidic cassette of Figure 13.
Figure 16 is a top view of an example microfluidic chip of the microfluidic cassette of Figure 13.
Figure 17 is an enlarged view of a portion of the microfluidic chip of Figure 16.

### DETAILED DESCRIPTION OF EXAMPLES

To collect enough data to make a clinically relevant conclusion or to process enough of a sample to enable researchers to advance their understanding of the sample being analyzed, a relevant sample size is processed. To control the number of cells or particles flowing through a sensing region at any one time and to reduce fluid flow resistance, some fluid sensing systems process a relevant sample size by diluting a sample and directing a large volume of the diluted sample across a sensor at a low flux or fluid flow rate. Sensing such large volumes of fluid may involve large, space consuming and expensive componentry. Moreover, sensing such large volumes of fluid may utilize large amounts of reactants for carrying out such testing, further increasing the cost of such testing.

Other systems process the relevant sample size by directing a small volume of fluid across the sensor at a sufficiently high flux or fluid flow rate. To achieve sufficient flux, many existing fluid sensing systems utilize fluid pumps that consume large amounts of power, resulting in such systems being relatively large, cumbersome, expensive and difficult to use.

In contrast to such existing systems, microfluidic sensing system 20 may process the relevant sample without the large sample volumes and large componentry and without the high power consumption. In one implementation, microfluidic sensing system 20 comprises a microfluidic component for sensing characteristics of a fluid, such as the number of cells or particles in the fluid. For purposes of this disclosure, the term "microfluidic", as in "microfluidic component", refers to the size or scaling of the microfluidic component. A microfluidic component comprises a structure or hardware that deals with volumes of fluid on the order of a microliter or less, including nanoliters or picoliters. In some implementations, the structure or hardware that deals with the volumes of fluid has maximum dimensions on the order of millimeters or submillimeters. For example, in one implementation, system 20 utilizes a chip that is 2 mm by 1 mm, wherein the chip underlies a reservoir that holds microliter volumes and wherein the chip itself channels and interacts with submicroliter volumes of fluid. Microfluidic sensing system 20 facilitates fluid testing with relatively small amounts of fluid and small amounts of reagent, saving cost while producing less waste and potentially less biohazardous material than existing benchtop methods for fluid testing.

Instead of utilizing a single pump that consumes a large amount of power to provide satisfactory flux, microfluidic sensing system 20 utilizes multiple fluid drivers in a chamber that are sequentially actuated to eject fluid out of the chamber and draw fluid across a sensing region. The sequential actuation of the fluid drivers provides enhanced flux or fluid flow across a sensing region without the otherwise associated high power demands. As a result, microfluidic sensing system 20 may be provided on a portable platform and may be powered by source providing lower power, such as from a port of a portable electronic device. For example, in one implementation, microfluidic sensing system 28 is provided on a portable platform, which is powered through
a universal serial bus port of a portable electronic device.

As schematically shown by 1, system 20 comprises microfluidic passage 24, inlet 26, sensor 30, chamber 34, nozzles 36A, 36B (collectively referred to as nozzles 36), fluid drivers 38A, 38B (collectively referred to as fluid driver 38) and controller 40. Microfluidic passage 24 comprises a path along which fluid is supplied to a mouth 44 of inlet 26. In one implementation microfluidic passage 24 is connected to a sample deposit or fill passage through which a fluid sample to be tested is supplied. In one implementation, microfluidic passage 24 supplies fluid for testing to multiple inlets 26, each inlet containing a sensor 30.

Inlet 26 comprises a microfluidic passage extending off of microfluidic passage 24, from mouth 44, and connected to chamber 34 at outlet 45. Inlet 26 extends adjacent to or contains sensor 30 while defining a sensing zone 46, the zone in which the fluid is sensed by sensor 30. Inlet 26 is sized so as to have a smaller cross-sectional area than that a microfluidic passage 24 and that of chamber 34. Inlet 26 serves as a constriction through which fluid flows. In one implementation, microfluidic passage 26 has a cross-sectional area size according to the expected dimensions of individual biological cells contained in the fluid being tested. For example, in one implementation, inlet 26 is dimensioned such that cells pass through inlet 26 to chamber 34 in a serial fashion, facilitating accurate sensing of the characteristics of the cells of the fluid.

In one implementation, inlet 26 comprises a channel that has a smaller cross-sectional area than both adjacent regions of inlet 26, upstream and downstream of inlet 26. Inlet 26 has a cross-sectional area similar to that of the individual particles or cells that pass through inlet 26 and which are being tested. In one implementation in which the cells being tested have a general or average maximum dimension of 6 µm, inlet 26 has a cross-sectional area of 100 µm². In one implementation, inlet 26 has a sensing volume of 1000 µm³. For example, in one implementation, sensing zone 46 of inlet 26 has a sense volume having a length of 10 µm, a width of 10 µm and a height of 10 µm. In one implementation, inlet 26 has a width of no greater than 30 µm. The sizing or dimensioning of inlet 26 restricts the number of particles or individual cells that may pass through inlet 26 at any one moment, facilitating testing of individual cells or particles passing through inlet 26.

Sensor 30 comprises a micro-fabricated device formed upon substrate 32 within inlet 26 that senses characteristics of the fluid being tested. In one implementation, sensor 30 comprises a micro-device that is designed to output electrical signals or cause changes in electrical signals that indicate properties, parameters or characteristics of the fluid and/or cells/particles of the fluid passing through inlet 26. In one implementation, sensor 30 comprises an impedance sensor which outputs signals based upon changes in electrical impedance brought about by differently sized particles or cells flowing through inlet 26 and impacting impedance of the electrical field across or within inlet 26. In one implementation, sensor 30 comprises an electrically charged high side electrode and a low side electrode formed within or integrated within a surface of inlet 26 within inlet 26. In one implementation, the low side electrode is electrically grounded. In another implementation, the low side electrode is a floating low side electrode.

Chamber 34 comprises a volume into which fluid flows after having been sensed or detected by sensor 30 within sensing zone 46. Chamber 34 contains or surrounds nozzles 36 and fluid drivers 38. Nozzles 36 are connected to chamber 34, wherein each of nozzles 36 comprises an opening through which fluid within chamber 34 is ejected. In one implementation, each nozzle 36 opens into or directs ejected fluid into a waste reservoir.

Fluid drivers 38 comprise devices to selectively move and discharge fluid from chamber 34 through nozzles 36. In one implementation, fluid drivers are independently actuatable, meaning that the different fluid drivers may be actuated at different times and without regard to the actuation of each other. In one implementation, each of fluid drivers 38 comprises a fluid ejection device such as a thermal inkjet resistor which nucleates fluid to create a bubble to forcefully expel or eject fluid through nozzle 36. In another implementation, each fluid driver 38 comprises a fluid ejection device such as a piezo resistive device that changes shape or vibrates in response to applied electrical current to move a diaphragm to thereby eject adjacent fluid through nozzle 36. In still other implementations, each fluid driver 38 may comprise other devices to selectively and forcibly eject fluid through nozzle 36. The ejection or expulsion of fluid within chamber 34 through nozzle 36 creates a void within the chamber 34 or a vacuum within chamber 34 which draws fluid into chamber 34 to fill the void, the fluid being drawn from microfluidic passage 24 through inlet 26 and across sensing zone 46. As the fluid is flowing through inlet 26 and across sensing zone 46, sensor 30 senses one or more characteristics of the fluid within sensing zone 46. As noted above, the constricted or smaller size of inlet 26 provides a sensing zone that provides enhanced sensing performance and resolution.

Controller 40 receives signals from sensor 30 and determines fluid flow, characteristics of the fluid and/or characteristics of the cells or particles within the fluid based upon such signals. Controller 40 comprises a processing unit and associated non-transient computer-readable medium containing instructions for the processing unit to carry out the determination of fluid flow, characteristics of the fluid and/or characteristics of the cells or particles within the fluid based upon the signals received from sensor 30. In one implementation, controller 40 additionally controls the actuation of fluid drivers 38.

For purposes of this application, the term "processing unit" shall mean a presently developed or future developed processing unit that executes sequences of instructions contained in a memory. Execution of the sequences of instructions causes the processing unit to perform steps such as generating control signals. The instructions may be loaded in a non-transitory computer readable medium such as a random access memory (RAM) for execution by the processing unit from a read only memory (ROM), a mass storage device, or some other persistent storage. In other embodiments, hard wired circuitry may be used in place of or in combination with software instructions to implement the functions described. For example, controller 40 may be embodied as part of one or more application-specific integrated circuits (ASICs). Unless otherwise specifically noted, the controller is not limited to any specific combination of hardware circuitry and software, nor to any particular source for the instructions executed by the processing unit.

Controller 40 further outputs control signals sequentially actuating fluid drivers 38A, 38B to jet or expel fluid from chamber 34 through nozzles 36A, 36B so as to draw fluid from microfluidic passage 24 into chamber 34 across inlet 26. In one implementation, controller 40 sequentially actuates or initiates fluid drivers 38A, 38B. In one implementation, controller 40 sequentially actuates first and second fluid drivers 38 such that an expanding bubble from actuation of the first fluid driver does not intersect an expanding bubble from actuation of the second fluid driver. In one implementation, the actuation of the first fluid driver 3 8A creates a positive pressure during a first time in a first region within the chamber proximate to the first nozzle 36A to push fluid through the first nozzle 36A followed by a negative pressure during a second time in the region to draw fluid to the first region, wherein actuation of the second fluid driver 38B creates a positive pressure during a third time in a second region within the chamber proximate to the second nozzle 36B to push fluid through the second nozzle 36B followed by a negative pressure during a fourth time in the second region to draw fluid to the second region and wherein the controller 40 sequentially actuates the
second fluid driver 38B following actuation of the first fluid driver 38A following an end of the first time and before expiration of the second time. Although microfluidic sensing system 20 is illustrated as having two fluid drivers 38 and associated nozzles 36, in other implementations, microfluidic sensing system 20 may alternatively include more than two fluid drivers 38 and associated nozzles 36, wherein the more than two fluid drivers 38 are sequentially actuated in a fashion similar to that described above.

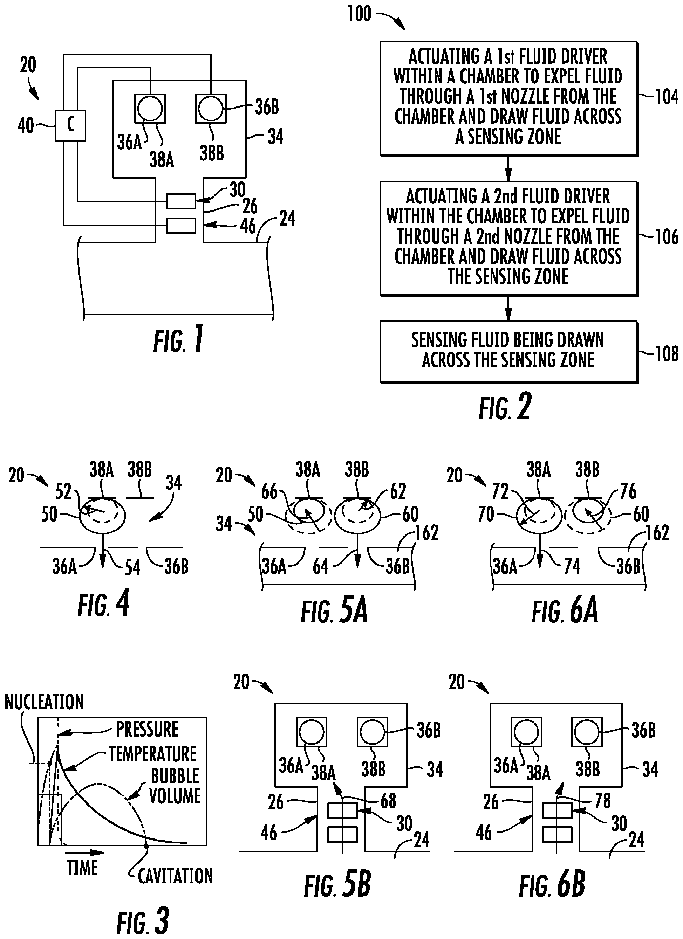

Figure 2 is a flow diagram of an example method 100 for drawing fluid across a sensing zone. In one implementation, method 100 may be carried out by system 20 described above. As indicated by block 104, in one example implementation, a first fluid driver, such as fluid driver 38A, within a chamber, such as chamber 34, is actuated by controller 40 to expel fluid through a first nozzle, such as nozzle 36A, from the chamber so as to draw fluid across a sensing zone, such as sensing zone 46 located within inlet 26.

As indicated by block 106, a second fluid driver, such as fluid driver 38B, within the chamber, such as chamber 34, is actuated by controller 40 to expel fluid through a second nozzle, such as nozzle 36B, from the chamber so as to draw fluid across a sensing zone, such as sensing zone 46 located within inlet 26. In one implementation, actuation of the second fluid driver by the controller is performed while fluid is still being drawn across the sensing zone from the prior actuation of the first fluid driver. In one implementation where the fluid drivers comprise bubble jet resistors, actuation of the second fluid driver by the controller is performed no sooner than when the bubble created by the actuation of the first fluid driver has reached its maximum volume, prior to complete collapse of the bubble. In one implementation, actuation of a second fluid driver by the controller is performed at a point in time when the bubble created by actuation of the first fluid driver has reached its maximum size. In one implementation where the fluid drivers comprise piezo-resistive fluid drivers, actuation of the second fluid driver is performed no sooner than when the diaphragm has been fully extended to displace the greatest amount of fluid within the chamber, but prior to the diaphragm returning to an initial default state.

In one implementation, actuation of the total number N of fluid drivers 38 within chamber 34 is sequenced over time. Various patterns are possible for the sequence. For example, in one implementation, drivers 38 are actuated at 1000Hz with each fluid driver 38 being actuated every 1ms. The application of voltage occurs for ∼2µs and it takes another ∼20µs for the bubble to expand and collapse. During that expansion and collapse, new control data is moved to a second resistorwhich is activated. The process continues with the first fluid driver again or with a third fluid driver and so on. By switching fluid drivers, flow may be modulated based on their interaction and also allow time for a given nozzle to reach steady state before being activated again.

As indicated by block 108, in one implementation, as the fluid is flowing across the sensing zone, such as sensing zone 46, characteristics of the fluid are sensed. In one implementation, controller 40 outputs signals to and receives signals from sensor 30 to determine characteristics of the fluid flowing through the sensing zone, such as the number of cells or particles passing through or across the sensing zone for a given volume of fluid or over a particular period of time. The greater rate of fluid flow or the greater flux of fluid across the sensing zone increases the rate at which sensor 30 may sense characteristics of the fluid, facilitating the processing of a relevant sample volume. In some implementations, the greater rate of fluid flow or flux across a sensing zone further enhances accuracy with respect to the sensing of characteristics of the fluid. At the same time, because multiple fluid drivers are sequentially actuated within a single chamber, such as chamber 34, the power consumed per unit of flow rate or flux is reduced.

In one implementation, flux or fluid flow is measured in terms of the volume of fluid moved across the sensing zone. In one implementation, the volume of fluid across the sensing zone occurs at a rate of at least a nanoliter per second and nominally at least 10 µL per second. In one implementation, such fluid flow rates are achieved at a rate of at least .5 m/s with application of power to the first fluid driver and the second fluid driver (and any other additional fluid drivers and associated nozzles provided in chamber 34) of less than or equal to 2.5 W.

In one implementation, flux or fluid flow is measured in terms of the number of particles or cells, carried within the fluid, that are moved across the sensing zone. In one implementation, fluid is drawn through or across the sensing zone at a rate of at least 20 cells per second. In one implementation, for enhanced sensing performance, fluid is drawn through or across sensing zone at a rate of at least 1000 cells per second. In one implementation, fluid flow rates of at least 10 cells/particles per second are achieved with application of power to the first fluid driver and the second fluid driver (and any other additional fluid drivers and associated nozzles provided in chamber 34) of less than or equal to one Watt. In one implementation, system 20 achieves the flow rate of at least 10 cells/particles per second for each Watt of power supply to the fluid drivers. In one implementation, system 20 provides a flow rate of at least 10,000 cells/particles per second past or across the sensing zone for each Watt of power consumed by the fluid drivers.

In one implementation, system 20 receives all of its electrical power through a universal serial bus port, wherein voltage values are in the range of 5 to 10 V. In such an implementation, fluid drivers 38 comprise bubble jet resistors having resistance values of 10 to 50 ohms. Each firing event or fluid driving event comprises a pulse electrical energy of between 0.5 µs and 2 µs, nominally 1 µs. Energy consumption for the firing or driving event is between one microJoule and two microJoules, nominally two microJoules. The total number of fluid drivers 38 within chamber 34 are collectively fired at a rate of between 1000 times per second (1 kHz), wherein the total energy consumed is approximately 2mJ (1000*2 microJoule). In such an implementation, depending upon the level of dilution, active firing or fluid driving provides a flux of 1000 to 10,000 cells per second. As a result, the flux to energy ratio of at least 1000 cells per second per W of power is provided. In other terms, the flux to energy ratio may be expressed as 1000 cells per mJ of energy or 1 M cells per Joule of energy. The relationship between flux, energy and power scales with a number of nozzles or fluid driver 38 that are firing. The higher the number of nozzles, the higher the power consumption. The cell processing rate with more nozzles (or larger nozzle) may be scaled with higher data rate capabilities for controller 40.

During periods of time when particular fluid drivers 38 are not actuated, fluid within chamber 34 may nevertheless undergo evaporation through nozzle 36. Such evaporation may further result in fluid in the cells/ carried within such fluid being drawn across sensing zone 46. In general, the fluid flux across sensing zone 46 caused by evaporation is much smaller (by orders of magnitude) than the flux caused by actuation of fluid driver 38. Throughout this disclosure, the specific flux or flow rates disclosed comprise both the flow rate resulting from the firing of the fluid drivers as well as any such flux or flow rate that is the result of ongoing evaporation of fluid within chamber 34 through nozzle 36.

In some implementations, the rate at which the fluid or cells are directed across the sensing zone is controlled so as to not exceed the computing capability of microfluidic sensing system 20. For example, in one implementation, fluid flow rate is controlled so as to not exceed 10,000 cells per second, wherein each cell is associated with 10 data points. As the computing capability of microfluidic sensing system 20 increases, the ability of microfluidic sensing system to accommodate higher fluid flow rates and higher data acquisition rates may also increase.

Because the relatively high rate of fluid flow or flux is achieved with a lower power consumption, method 100 facilitates the sensing of fluid utilizing power provided by lower power sources, such as power supplied by portable electronic devices. For example, in some implementations, method 100 may facilitate microfluidic sensing merely utilizing the power provided by or through a port, such as a universal serial bus port, of a portable electronic device, such as a notebook computer, tablet computer or smart phone.

Figures 3-7 illustrate one example method by which system 20 or other fluid testing systems of this disclosure maybe operated. Figures 3-7 illustrate example operation of system 20, wherein fluid drivers 38 comprise bubble jet resistors. Figure 3 is a graph illustrating characteristics of an example actuation of one of fluid drivers 38. For purposes of this disclosure, the term "actuation" with respect to a fluid driver refers to the moment in time at which the fluid driver begins to interact and displace adjacent fluid. With respect to bubble jet resistors, actuation of the bubble jet resistor refers to the time at which the resistor emits a sufficient amount of heat to achieve nucleation of adjacent fluid to begin the formation of a bubble that displaces adjacent fluid. As shown by Figure 3, at the point of actuation or nucleation, the resulting bubble has a volume that gradually increases and then gradually decreases to a point of cavitation. As the volume of the bubble increases, the bubble pushes or rejects fluid, in the form of a droplet, through the corresponding one of nozzles 36. When the maximum volume of the bubble has been reached, bubble volume begins to decrease, creating a vacuum or void which then draws fluid across inlet 26.

Figure 4 schematically illustrates system 20 after actuation of fluid driver 38A, a bubble jet resistor in the example illustrated. As shown by Figure 4, such actuation results in the creation of a bubble 50. At the time illustrated in Figure 4, bubble 50 is in an expanding state as indicated by the prior smaller bubble (shown in broken lines) and arrow 52. As further shown by Figure 4, the expanding bubble 50 pushes or ejects fluid through nozzle opening 36A as indicated by arrow 54.

Figures 5A and 5B illustrate the sequential or subsequent actuation of fluid driver 36B. As shown by Figure 5A, actuation of fluid driver 38B results in the creation of bubble 60. At the time illustrated in Figure 5A, bubble 60 is in an expanding state as indicated by the prior smaller bubble (shown in broken lines) and arrow 62. The expanding bubble 60 pushes or ejects fluid through nozzle opening 36B as indicated by arrow 64. As further shown by Figure 5A, the timing at which fluid driver 38B is actuated is such that bubble 60 is expanding concurrently with the volume or size of bubble 50 reducing or contracting as indicated by the prior larger bubble size (shown in broken lines) and arrow 66. As a result, blow back and flow transients are reduced. The free surface meniscus of the adjacent nozzle, nozzle 36A, acts as a capacitor that absorbs the shock of bubble 60 to thereby isolate sensing region 46 from such transient events. Consequently, sensing region 46 experiences a uniform flow. As shown by Figure 5B, the contraction of bubble 50 creates a void in the region adjacent to fluid driver 38A which results in fluid being drawn from microfluidic passage 24 into chamber 34 through inlet 26 across sensor 30 and across sensing zone 46 as indicated by arrow 68.

Figures 6A and 6B illustrate the subsequent sequential actuation of fluid driver 38A. As shown by Figure 6A, actuation of fluid driver 38A results in the creation of bubble 70. At the time illustrated in Figure 6A, bubble 70 is in an expanding state as indicated by the prior smaller bubble (shown in broken lines) and arrow 72. The expanding bubble 70 pushes or ejects fluid through nozzle opening 36A as indicated by arrow 74. As further shown by Figure 6A, the timing at which fluid driver 38A is actuated is such that bubble 70 is expanding concurrent with the volume or size of bubble 60 reducing or contracting as indicated by the prior larger bubble size (shown in broken lines) and arrow 76. As shown by Figure 6B, the contraction of bubble 70 creates a void in the region adjacent to fluid driver 38B which results in fluid being drawn from microfluidic passage 24 into chamber 34 through inlet 26 across sensor 30 and across sensing zone 46 as indicated by arrow 78.

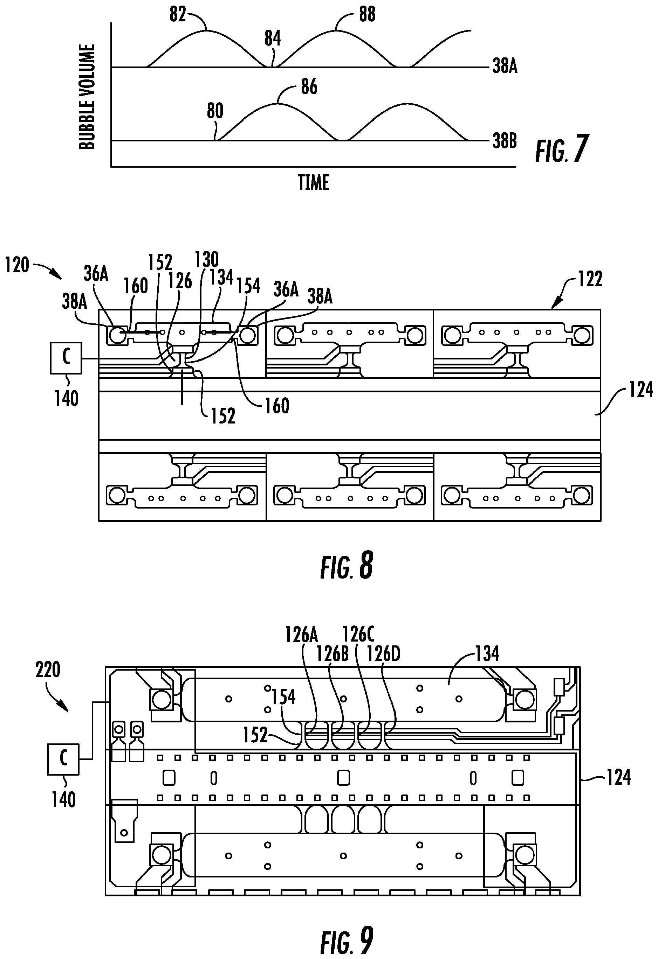

As graphically illustrated by Figure 7, the general process or cycle illustrated in Figures 4-6B is repeated over time. In the example illustrated, each of the fluid drivers 38 is sequentially actuated with respect to the prior actuation of the other of fluid drivers 38 to create an expanding bubble within chamber 34 beginning at a time when the bubble created by the prior actuation of the other of fluid driver 38 has reached its maximum size or is beginning to reduce in size or begin its collapse. In the example illustrated, fluid driver 38B is actuated at time 80 when the volume of the bubble previously formed by the actuation of fluid driver 38A has reached its maximum size at time 82. Likewise, the subsequent actuation of fluid driver 38A occurs at a time 84 when the volume of the bubble previously formed by the actuation of fluid driver 38B has reached its maximum size at time 86. As shown by Figure 7, this process or cycle is repeated over time.

In other implementations, the degree to which the lifecycles of the individual bubbles in chamber 34 created by the actuation of fluid drivers 38 overlap one another in time may vary. For example, in other implementations, instead of being actuated at time 80, that is, the time at which the bubble created through the actuation of fluid driver 38A has reached maximum size, fluid driver 38B may alternatively be actuated at any time between the time that the bubble created through the actuation of fluid driver
38A has reached maximum size to the time at which the same bubble cavitates or completely collapses, between time 82 and time 84. Likewise, instead of being actuated at time 84, that is, the time at which the bubble created through the actuation of fluid driver 38B has reached maximum size, fluid driver 38A may alternatively be actuated at any time between the time at which the same bubble has reached its maximum size and the time at which the bubble cavitates or completely collapses, between time 84 and time 88.

Figure 8 illustrates microfluidic sensing system 120, another example implementation of microfluidic sensing system 20. Microfluidic sensing system 120 is similar to microfluidic sensing system 20 in that microfluidic sensing the system 120 sequentially actuates multiple fluid drivers within each individual chamber to draw fluid across a sensing zone at a higher flux or higher rate and to provide such enhanced flux with lower power consumption or power demands. In the example illustrated, microfluidic sensing system 120 comprises microfluidic passage 124 and six sensing regions 122 dispose along microfluidic passage 124.

Microfluidic passage 124 similar microfluidic passage 24 described above. Microfluidic passage 124 comprises a path along which fluid is supplied to each of sensing regions 122. In one implementation, microfluidic passage 124 is connected to a sample deposit or fill passage through which a fluid sample to be tested is supplied.

Each sensing region 122 extends off of micro fluidic passage 124. Each sensing region 122 comprises inlet 126, a sensor 130, chamber 134, nozzles 36 and fluid drivers 38 (described above). Inlet 126 comprises a microfluidic passage extending off of microfluidic passage 124. In the example illustrated, inlet 126 is similar to inlet 26 described above except that inlet 126 comprises a funnel portion 152 and a constriction portion 154. Funnel portion 152 is connected to microfluidic passage 124 at mouth 156, and leads to constricted portion 154. Constricted portion 154 extends from funnel portion 152 and is connected to chamber 134 at outlet 158. Constricted portion 154 of inlet 126 extends adjacent to or contains sensor 30 while defining the sensing zone 46, the zone in which the fluid is sensed by sensor 30. Constricted portion 154 is sized so as to have a smaller cross-sectional area than that of microfluidic passage 124 and that of chamber 134. In one implementation, constricted portion 154 has a cross-sectional area size according to the expected dimensions of individual biological cells contained in the fluid being tested. For example, in one implementation, constricted portion 154 of inlet 126 is dimensioned such that cells pass through constricted portion 154 to chamber 134 in a serial fashion, facilitating accurate sensing of the characteristics of the cells of the fluid.

In one implementation, constricted portion 154 comprises a channel that has a smaller cross-sectional area than both adjacent regions of constricted portion 154, upstream and downstream of constricted portion 154. Constricted portion 154 of inlet 126 has a cross-sectional area similar to that of the individual particles or cells that pass through inlet 126 and which are being tested. In one implementation in which the cells being tested have a general or average maximum dimension of 6 µm, inlet 26 has a cross- sectional area of 100 µm². In one implementation, constricted portion 154 has a sensing volume of 1000 µm³. For example, in one implementation, sensing zone 46 of constricted portion 154 has a sense volume having a length of 10 µm, a width of 10 µm and a height of 10 µm. In one implementation, constricted portion 154 has a width of no greater than 30 µm. The sizing or dimensioning of constricted portion 154 restricts the number of particles or individual cells that may pass through constricted portion 154 at any one moment, facilitating testing of individual cells or particles passing through constricted portion 154.

As with chamber 34, chamber 134 comprises a volume into which fluid flows after having been sensed or detected by sensor 30 within sensing zone 46. Chamber 134 contains or surrounds nozzles 36 and fluid drivers 38. In the example illustrated, chamber 134 contains nozzle 36A and its fluid driver 38A on one end and a nozzle 36B its fluid driver 38B on another opposite end. The chamber side funnel 158 of inlet 126 is centrally located between the opposite ends of chamber 34. In the example illustrated, the chamber side funnel 158 of inlet 126 is equidistantly spaced from the opposite ends of chamber 134.

In the example illustrated, chamber 134 comprises a constriction 160 through which fluid must flow to reach each of nozzles 36. Constriction 160 inhibits particles too large for the opening of each of nozzles 36 from reaching each of nozzles 36 and occluding each of nozzles 36. In other implementations, constriction 160 may be omitted. Nozzles 36 are connected to chamber 134 and comprise an opening through which fluid within chamber 134 is ejected. In one implementation, nozzles 36 each open into or direct ejected fluid into a waste reservoir 162 (shown in Figure 5A).

Controller 140 is similar to controller 40 described above. Controller 140 receives signals from sensor 130 and determines fluid flow, characteristics of the fluid and/or characteristics of the cells or particles within the fluid based upon such signals. Controller 140 comprises a processing unit and associated non-transient computer-readable medium containing instructions for the processing unit to carry out the determination of fluid flow, characteristics of the fluid and/or characteristics of the cells or particles within the fluid based upon the signals received from sensor 130. Controller 140 further outputs control signals sequentially actuating fluid drivers 38A, 38B to jet or expel fluid from chamber 134 through nozzles 36A, 36B so as to draw fluid from microfluidic passage 124 into chamber 134 across inlet 26. Controller 140 sequentially actuates or initiates fluid drivers 38A, 38B. In one implementation, controller 140 sequentially actuates first and second fluid drivers 38 such that an expanding bubble from actuation of the first fluid driver does not intersect an expanding bubble from actuation of the second fluid driver. In one implementation, the actuation of the first fluid driver 38A creates a positive pressure during a first time in a first region within the chamber proximate to the first nozzle 36A to push fluid through the first nozzle 36A followed by a negative pressure during a second time in the region to draw fluid to the first region, wherein actuation of the second fluid driver 38B creates a positive pressure during a third time in a second region within the chamber proximate to the second nozzle 36B to push fluid through the second nozzle 36B followed by a negative pressure during a fourth time in the second region to draw fluid to the second region and wherein the controller 140 sequentially actuates the second fluid driver 38B following actuation of the first fluid driver 38A following an end of the first time and before expiration of the second time. In one implementation, controller 140 actuates fluid drivers 38 in a sequential fashion as described above with respect to method 100 or as shown in Figures 4-7.

Figure 9 illustrates a portion of microfluidic sensing system 220, another example of microfluidic sensing system 20. Microfluidic sensing system 220 is similar to microfluidic sensing system 120 except that microfluidic sensing system 220 comprises multiple inlets 126A, 126B, 126C and 126D extending between and connecting fluid passage 124 and fluid chamber 134. Those remaining components or elements of system 220 which correspond to components or elements of system 120 are numbered similarly. Each of inlets 126 comprises a funnel 152 and a constriction 154. The constriction 154 of each of inlets 126 is adjacent to or contains sensor 130 to form a sensing zone 146 within each constriction 154. In the example illustrated, inlets 126 are concentrated proximate to a center region equidistantly spaced from nozzle 36A and nozzle 36B. In other implementations, inlets 126 may have other distributions or locations along chamber 134.

In operation, microfluidic sensing system 220 functions similarly to microfluidic sensing system 120 except that data may be obtained from fluid being concurrently drawn through and across the sensing zones of each of inlets 126. Controller 140 receives signals from sensor 130 and determines fluid flow, characteristics of the fluid and/or characteristics of the cells or particles within the fluid based upon such signals. Controller 140 further outputs control signals sequentially actuating fluid drivers 38A, 38B to jet or expel fluid from chamber 34 through nozzles 36A, 36B so as to draw fluid from microfluidic passage 124 into chamber 134 across each of inlets 126. Controller 140 sequentially actuates or initiates fluid drivers 38A, 38B. In one implementation, controller 140 sequentially actuates first and second fluid drivers 38 such that an expanding bubble from actuation of the first fluid driver does not intersect an expanding bubble from actuation of the second fluid driver. In one implementation, the actuation of the first fluid driver 38A creates a positive pressure during a first time in a first region within the chamber proximate to the first nozzle 36A to push fluid through the first nozzle 36A followed by a negative pressure during a second time in the region to draw fluid to the first region, wherein actuation of the second fluid driver 38B creates a positive pressure during a third time in a second region within the chamber proximate to the second nozzle 36B to push fluid through the second nozzle 36B followed by a negative pressure during a fourth time in the second region to draw fluid to the second region and wherein the controller 140 sequentially actuates the second fluid driver 38B following actuation of the first fluid driver 38A following an end of the first time and before expiration of the second time. In one implementation, controller 140 actuates fluid drivers 38 in a sequential fashion as described above with respect to method 100 or as shown in Figures 4-7.

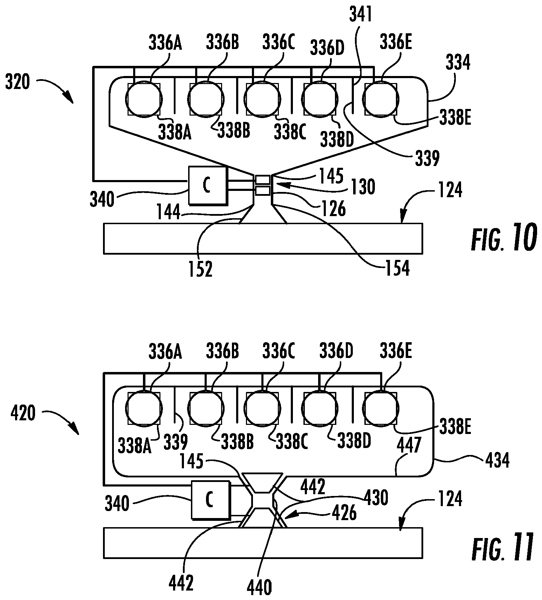

Figure 10 illustrates microfluidic sensing system 320, another example implementation of microfluidic sensing system 20 described above. Like microfluidic sensing system 120, microfluidic sensing system 320 includes multiple nozzle-fluid driver pairs within the chamber to draw fluid across the sensing zone into the chamber. However, unlike system 120, microfluidic sensing system 320 comprises at least three nozzle-fluid driver pairs. System 320 comprises a first nozzle and associated fluid driver at one end of the chamber, a second nozzle and associated fluid driver at an opposite end of the chamber and a third nozzle and associated fluid driver at a center or intermediate location in the chamber. As a result, system 320 draws fluid across the sensing zone to of each of multiple spaced locations across substantially an entirety of the length of the chamber.

Microfluidic sensing system 320 comprises microfluidic passage 124, inlet 126, sensor 130, chamber 334, nozzles 336A, 336B, 336C, 336D and 336E (collectively referred to as nozzles 336), fluid drivers 338A, 338B, 338C, 338E and 338E (collectively referred to as fluid drivers 338), stalls 339 and controller 340. Microfluidic passage 124, inlet 126 and sensor 130 are described above.

Chamber 334 comprises a volume into which fluid flows after having been sensed or detected by sensor 130 within sensing zone 146. Chamber 334 contains or surrounds nozzles 336 and fluid drivers 338. As shown by Figure 10, chamber 334 gradually tapers to outlet 145 of inlet 126. Chamber 334 fans out from inlet 126.

Nozzles 336 are connected to chamber 334, wherein each of nozzles 336 comprises an opening through which fluid within chamber 334 is ejected. In one implementation, each of nozzles 336 opens into or directs ejected fluid into a waste reservoir.

Fluid drivers 338 comprise devices to selectively move and discharge fluid from chamber 334 through associated nozzles 336. In the example illustrated, each fluid driver 338 comprises a fluid ejection device such as a thermal inkjet or bubble jet resistor which nucleates fluid to create a bubble to forcefully expel or eject fluid through and associated nozzle 336. In another implementation, fluid drivers 338 each comprise a fluid ejection device such as a piezo resistive device that changes shape or vibrates in response to applied electrical current to move a diaphragm to thereby eject adjacent fluid through nozzle 336. In still other implementations, fluid driver 338 may comprise other devices to selectively and forcibly eject fluid through nozzle 336.

The ejection or expulsion of fluid within chamber 334 through the associated nozzle 336 creates a void within the chamber 334 or a vacuum within chamber 334 which draws fluid into chamber 334 to fill the void, the fluid being drawn from microfluidic passage 124 through inlet 126 and across sensing zone 146. As the fluid is flowing through inlet 126 and across sensing zone 146, sensor 130 senses one or more characteristics of the fluid within sensing zone 146. Signals from sensor 130 are transmitted to controller 340.

Stalls 339 comprise isolated regions formed by partitioning walls or structures 341 extending between consecutive nozzles 336 and their associated fluid drivers 338. In one implementation, partitioning structures 341 have a length of at least half the diameter of nozzles 336 and nominally equal to or greater than the diameter of each of nozzles 336. In other implementations, stalls 339 comprise multiple partitions adjacent to one another. In still other implementations, stalls 339 comprise single or multiple partitions having a length less than half the diameter of nozzles 336. Stalls 339 isolate fluid drivers 338 from one another such that the bubble or positive pressure fluid resulting from the actuation of one fluid driver 338 has a lessened or limited impact or interference with the bubble or positive pressure fluid resulting from an adjacent or consecutive fluid driver 338. Stalls 339 facilitate closer sequential actuation of fluid drivers 338. In some implementations, stalls 339 may be omitted.

Controller 340 receives signals from sensor 130 and determines fluid flow, characteristics of the fluid and/or characteristics of the cells or particles within the fluid based upon such signals. Controller 340 comprises a processing unit and associated non-transient computer-readable medium containing instructions for the processing unit to carry out the determination of fluid flow, characteristics of the fluid and/or characteristics of the cells or particles within the fluid based upon the signals received from sensor 330.

Controller 340 additionally controls the actuation of fluid drivers 338. Controller 340 sequentially actuates fluid drivers 338. In one implementation, controller 340 sequentially actuates first and second individual fluid drivers or first and second sets of fluid drivers such that an expanding bubble from actuation of the first fluid driver or the bubbles from the actuation of the first set of fluid drivers do not intersect an expanding bubble from actuation of the second fluid driver or the second set of fluid drivers. In one implementation, the actuation of the first fluid driver 338 creates a positive pressure during a first time in a first region within the chamber proximate to the first nozzle to push fluid through the first nozzle followed by a negative pressure during a second time in the region to draw fluid to the first region, wherein actuation of the second fluid driver 338 creates a positive pressure during a third time in a second region within the chamber proximate to the second nozzle to push fluid through the second nozzle followed by a negative pressure during a fourth time in the second region to draw fluid to the second region and wherein the controller 340 sequentially actuates the second fluid driver following actuation of the first fluid driver following an end of the first time and before expiration of the second time. In one implementation, controller 340 actuates fluid drivers 338 in a sequential fashion as described above with respect to method 100 or as shown in Figures 4-7.

Figure 11 illustrates microfluidic sensing system 420, another example implementation of microfluidic sensing system 20. Microfluidic sensing system 420 is similar to microfluidic sensing system 320 except that system 420 comprises inlet 426, sensor 430 and chamber 434. Those remaining elements or structures correspond to elements or components of system 320 are numbered similarly.

Inlet 426 is similar to inlet 126 except that inlet 426 contains microfluidic inertial pump 968 and has an hourglass shape. Inlet 426 comprises a central constriction region 440 and two opposite funnel regions 442 which contain different portions of sensor 430. In the example illustrated, sensor 430 comprise an impedance sensor, wherein one of portions 442 is adjacent to an electrically charged high side electrode and the other of portions 442 is adjacent to a low side electrode formed within or integrated within a surface of inlet 426 within inlet 426. In one implementation, the low side electrode is electrically grounded. In another implementation, the low side electrode is a floating low side electrode.

Chamber 434 is similar to chamber 334 except the chamber 434 is rectangular, the inner wall 447 of chamber 434 being equally spaced from the center point of each of nozzles 336 across the width of chamber 434. As a result, chamber 434 provides an enlarged void or dead space between each of the fluid drivers 438 and the chamber side mouth 145 of inlet 426. This enlarged void or dead space reduces the likelihood that the expanding bubbles or regions of high pressure fluid during the sequential actuation of fluid drivers 336 will interfere or intersect with one another. As a result, fluid drivers 336 may be actuated closer in time for drawing fluid across sensing zone 446 of inlet 426 at a higher rate. In other implementations, chamber 434 may have other shapes, such as being shaped similar to chamber 434.

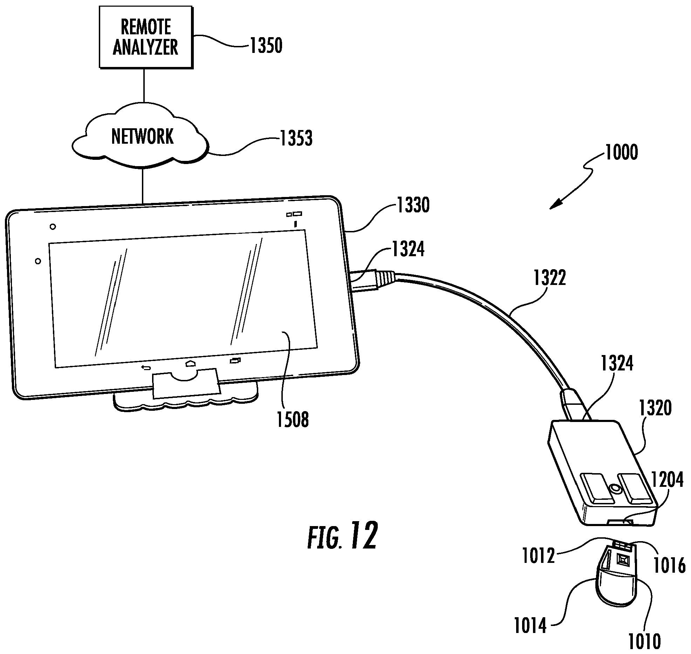

Figure 12 illustrates an example microfluidic diagnostic or testing system 1000. System 1000 comprises a portable electronic device driven, impedance-based system by which samples of fluid, such as blood samples, are analyzed. For purposes of this disclosure, the term "fluid" comprises the analyte in or carried by the fluid such as a cell, particle or other biological substance. The impedance of the fluid refers to the impedance of the fluid and/or any analyte in the fluid. System 1000, portions of which are schematically illustrated, comprises microfluidic cassette 1010, cassette interface 1320, mobile analyzer 1330 and remote analyzer 1350. Overall, microfluidic cassette 1010 receives a fluid sample and outputs signals based upon sensed characteristics of the fluid sample. Interface 1320 serves as an intermediary between mobile analyzer 1330 and cassette 1010. In the example illustrated, interface 1320 comprises a dongle releasably connected to mobile analyzer 1330 by a cable 1322 releasably or removably connected to interface 1320 at port 1324 and releasably or removably connected to mobile analyzer 1330 at port 1325. Interface 1320 removably connects to cassette 1010 and facilitates transmission of electrical power from mobile analyzer 1330 to cassette 1010 to operate fluid drivers, pumps and sensors on cassette 1010. Interface 1320 further facilitates control of the fluid drivers, pumps, and detectors or sensors on cassette 1010 by mobile analyzer 1330.

Mobile analyzer 1330 controls the operation cassette 1010 through interface 1320 and receives data produced by cassette 1010 pertaining to the fluid sample(s) being tested. Mobile analyzer 1330 analyzes data and produces output. Mobile analyzer 1330 further transmits processed data to remote analyzer 1350 across a wired or wireless network 1353 for further more detailed analysis and processing. In one implementation, mobile analyzer 1330 comprises controller 340 described above. In other implementations, mobile analyzer 1330 comprises any of the other of controllers 40, 140 described above. In the example illustrated, mobile analyzer 1330 comprises a portable electronic device such as a smart phone, laptop computer, notebook computer, tablet computer or the like. As a result, system 1000 provides a portable diagnostic platform for testing fluid samples, such as blood samples.

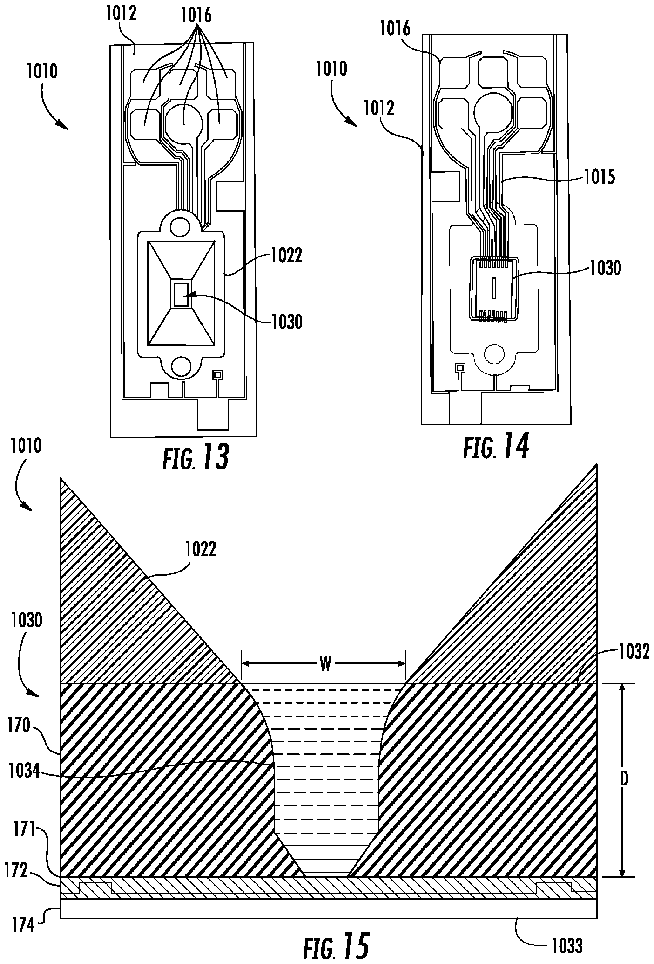

Figures 13-17 illustrate microfluidic cassette 1010 in detail. As shown by Figures 13-17, cassette 1010 comprises cassette board 1012, cassette body 1014, membrane 1015 and microfluidic chip 1030. Cassette board 1012, shown in Figures 13 and 14, comprises a panel or platform in which or upon which fluid chip 1030 is mounted. Cassette board 1012 comprises electrically conductive lines or traces 1015 which extend from electrical connectors of the microfluidic chip 1030 to electrical connectors 1016 on an end portion of cassette board 1012. As shown in Figure 12, electrical connectors 1016 are exposed on an exterior cassette body 1014. As shown by Figure 12, the exposed electrical connectors 1016 are to be inserted into interface 1320 so as to be positioned in electrical contact with corresponding electrical connectors within interface 1320, providing electrical connection between microfluidic chip 1030 and cassette interface 1320.

Cassette body 1014 partially surrounds cassette board 1012 so as to cover and protect cassette board 1012 and microfluidic chip 1030. Cassette body 1014 facilitates manual manipulation of cassette 1010, facilitating manual positioning of cassette 1010 into releasable interconnection with interface 1320. For purposes of this disclosure, the term "releasable interconnection" or "releasably connectable" with respect to two structures means that two structures may be repeatedly connected and disconnected to and from one another without damage to either structure Cassette body 1014 additionally positions and seals against a person's finger during the acquisition of a fluid or blood sample while directing the received fluid sample to microfluidic chip 1030.

Figures 13-15 illustrate microfluidic chip 1030. Figure 13 illustrates a top side of cassette board 1012, chip funnel 1022 and microfluidic chip 1030. Figure 13 illustrates microfluidic chip 1030 sandwiched between chip funnel 1022 and cassette board 1012. Figure 14 illustrates a bottom side of cassette board 1012 and microfluidic chip 1030. Figure 15 is a cross-sectional view of microfluidic chip 1030 below chip funnel 1022. As shown by Figure 15, microfluidic chip 1030 comprises layers 170, 172 and 174. In one implementation, layer 170 comprise a layer such as a polymer or silicon, wherein resistors, pumps, sensors and circuit traces are formed upon layer 170 adjacent to layer 172. Layer 172 comprises a layer of material such as transparent photoresist material such as an epoxy-based negative photoresist such as SU-8 (Bisphenol A novolac epoxy that has been dissolved in organic solvent such as gamma butylaractone GBL or cyclopentanone). Layer 174 comprises a layer of a polymer or other material which forms a chamber or compartment serving as a waste reservoir 1033. In other implementations, microfluidic chip 1030 may be formed from an alternative arrangement of layers using the same or different combinations of materials.

Microfluidic chip 1030 comprises a microfluidic reservoir 1034 formed in layer 170 and which extends below chip funnel 1022 to receive the fluid sample (with a reagentin some tests) into chip 1030. In the example illustrated, microfluidic reservoir has a mouth or top opening having a width W of less than 1 mm and nominally 0.5 mm. Reservoir 1034 has a depth D of between 0.5 mm and 1 mm and nominally 0.7 mm. As will be described hereafter, microfluidic chip 1030 comprises fluid drivers, pumps and sensors along a bottom portion of chip 1030.

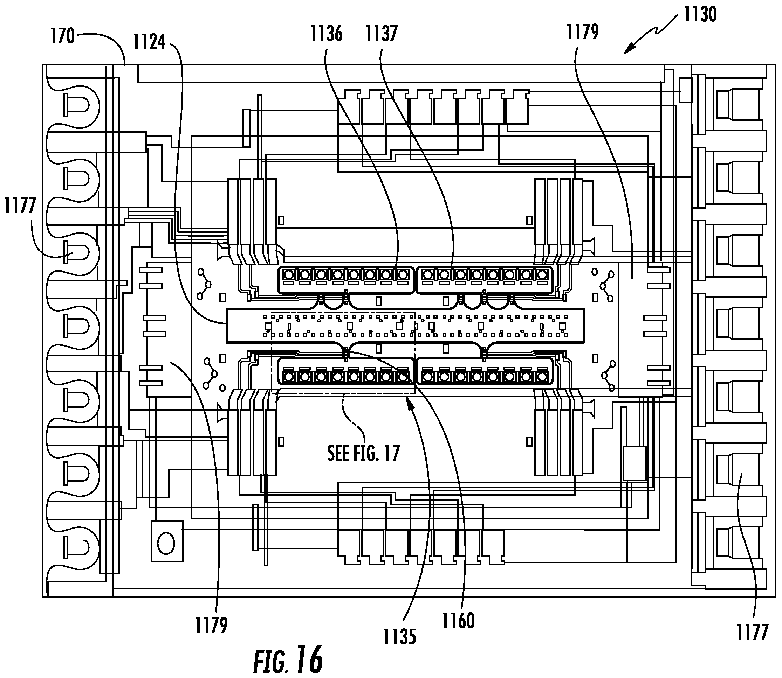

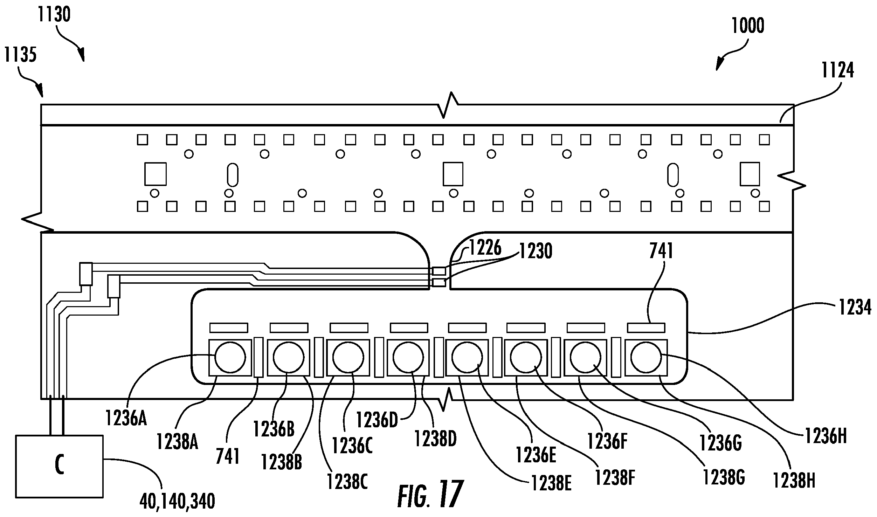

Figures 16 and 17 are enlarged views of microfluidic chip 1130, an example implementation of microfluidic chip 1130. Microfluidic chip 1130 integrates each of the functions of fluid pumping and impedance sensing on a low-power platform. As shown by Figure 16, microfluidic chip 1130 comprises layer 170 in which is formed microfluidic passage 1124. In addition, microfluidic chip 1130 comprises multiple sensing regions 1135, wherein each sensing region provides a chamber (formed by layer 172) containing multiple nozzles and multiple fluid drivers (formed upon layer 170), an inlet (formed by layer 172) connecting microfluidic passage to the chamber and a sensor (formed upon layer 170) along a surface of the inlet.

As further shown by Figure 16, microfluidic chip 1130 additionally comprises electrical contact pads 1177 and multiplexor circuitry 1179. Electrical contactpads 1177 are located on end portions of microfluidic chip 1130 which are spaced from one another by less than 3 mm and nominally less than 2 mm, providing microfluidic chip 1130 with a compact length facilitates the compact size of cassette 1010. Electrical contact pads 1177 are electrically connected to the sensors and pumps of chip 1130. Electrical contact pads 1177 are further electrically connected to the electrical connectors 1016 of cassette board 1012 (shown in Figures 13-14). When cassette 1010 is plugged into cassette interface 1320, controller 140, 240, 640 (described above), provided in portable electronic device 1330, is electrically connected to the sensors and pumps of chip 1130 via contactpads 1170.

Multiplexer circuitry 1179 is electrically coupled between electrical contact pads 1177 and the sensors and pumps 1160 of chip 1130. Multiplexer circuitry 1179 facilitates control and/or communication with a number of sensors and pumps that is greater than the number of individual electrical contactpads 1177 on chip 1130. For example, despite chip 1130 having a numbern of contact pads, communication is available with a number of different independent components having a number greater than n. As a result, valuable space or real estate is conserved, facilitating a reduction in size of chip 1130 and cassette 1010 in which chip 1130 is utilized. In other implementations, multiplexer circuitry 1179 may be omitted.

Figure 17 is an enlarged view illustrating one of sensing regions 1135 of chip 1130 shown in Figure 16. As shown by Figure 17, sensing region 1135 comprises microfluidic passage 1124, inlet 1226, sensor 1230, chamber 1234, nozzles 1236A, 1236B, 1236C, 1236D, 12636E, 1236F, 1236G and 1236H (collectively referred to as nozzles 1236), fluid drivers 1238A, 1238B, 1238C, 1238D, 12638E, 1238F, 1238G and 1238H (collectively referred to as fluid drivers 1238) and stalls 1239. Microfluidic passage 1124 and sensor 1130 are similar to microfluidic passage 124 and sensor 130, respectively, described above. Inlet 1226 is similar to inlet 126 described above except that inlet 1226 omits funnel 152, wherein inlet 1226 is the constriction. Inlet 1226 is similar to inlet 26 described above. In one implementation, inlet 1226 has dimensions as described above with respect to inlet 26.

Chamber 1234 is similar to chamber 934 described above. In other implementations, chamber 1234 may be similar to chamber 634 described above, wherein chamber 1234 additionally fans out to or towards the two dimensional array of nozzles 1236 and fluid drivers 1238. Nozzles 1236 and fluid drivers 1238 are similar to nozzles 636 and fluid drivers 638 described above. Stalls 1239 are similar to stalls 341 described above.

During operation of system 1000, controller 40, 140, 340 receives signals from sensor 130 and determines fluid flow, characteristics of the fluid and/or characteristics of the cells or particles within the fluid based upon such signals. Controller 40, 140, 340 additionally controls the actuation of fluid drivers 1238. In one implementation, controller 40, 140, 340 sequentially actuates fluid drivers 1238. In one implementation, controller 40, 140, 340 sequentially actuates first and second fluid drivers or first and second sets of fluid drivers such that an expanding bubble from actuation of the first fluid driver or the bubbles from the actuation of the first set of fluid drivers do not intersect an expanding bubble from actuation of the second fluid driver or the second set of fluid drivers. In one implementation, the actuation of the first fluid driver 1238 creates a positive pressure during a first time in a first region within the chamber proximate to the first nozzle to push fluid through the first nozzle followed by a negative pressure during a second time in the region to draw fluid to the first region, wherein actuation of the second fluid driver 1238 creates a positive pressure during a third time in a second region within the chamber proximate to the second nozzle to push fluid through the second nozzle followed by a negative pressure during a fourth time in the second region to draw fluid to the second region and wherein the controller 40, 140, 340 sequentially actuates the second fluid driver following actuation of the first fluid driver following an end of the first time and before expiration of the second time. In one implementation, controller 140 actuates fluid drivers 38 in a sequential fashion as described above with respect to method 100 or as shown in Figures 4-7.

In one implementation, fluid is drawn through or across the sensing zone at a rate of at least .5m/s with application of power to the first fluid driver and the second fluid driver of less than or equal to 2.5 W. Because the relatively high rate of fluid flow or flux is achieved with a lower power consumption, system 1000, cassette 1010 and microfluidic chip 1130 facilitate the sensing of fluid utilizing power provided by lower power sources, such as power supplied by portable electronic devices. For example, in some implementations, cassette 1010 and microfluidic chip 1130 may facilitate microfluidic sensing merely utilizing the power provided by or through a port, such as a universal serial bus port, of a portable electronic device, such as a notebook computer, tablet computer or smart phone.

As shown by Figure 16, in some implementations, microfluidic chip 1130 may comprise different sensing regions 1135. In the example illustrated, microfluidic chip 1130 comprises sensing regions 1136 and 1137. Sensing regions 1136 is similar to sensing region 1135 described above except that sensing region 1136 comprises two inlets connecting fluid passage 1124 to the chamber 1234 of sensing region 1136, wherein each of the two inlets includes a sensor 130. Sensing region 1137 is similar to sensing region 1135 except that sensing region 1137 comprises three inlets 1226 connecting fluid passage 1124 to the chamber 1234 of sensing region 1137, wherein each of the two inlets includes a sensor 130. The different number of inlets facilitates faster data collection for the given individual chamber and its fluid drivers 1236. In one implementation, each of the inlets 1226 of sensing region 1137 are differently sized (different cross-sectional areas or passage sizes) to accommodate the sensing of differently sized particles or cells, wherein the size of each of the constrictions of inlets 1226 inhibits or blocks those cells or particles that are too large to pass through such constrictions. In other implementations, microfluidic chip 1130 may multiple sensing regions 1135 which have uniform characteristics amongst the different sensing regions.

Although the present disclosure has been described with reference to example implementations, workers skilled in the art will recognize that changes may be made in form and detail without departing from the scope of the invention as defined in the appended claims. For example, although different example implementations may have been described as including one or more features providing one or more benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. An apparatus comprising:
a microfluidic passage (24);
a chamber (34) comprising a first nozzle (36A), a second nozzle (36B), a first fluid driver (38A), and a second fluid driver (38B);
an inlet (26) connecting the microfluidic passage (24) to the chamber (34);
wherein the first fluid driver (38A) is arranged to move fluid through the first nozzle (36A) to draw fluid across the inlet (26);
wherein the second fluid driver (38B) is arranged to move fluid through the second nozzle (36B) to draw fluid across the inlet (26); and
a controller (40) to actuate the first fluid driver (38A) and the second fluid driver (38B);
wherein the nozzles (36A, 36B) are adjacent to one another and are connected to the chamber (34), each nozzle (36A, 36B) comprising an opening through which fluid within the chamber (34) can be ejected;
**characterized in that** the controller (40) is arranged to sequentially actuate the first fluid driver (38A) and the second fluid driver (38B); and
a sensor (30), proximate to the inlet (26), arranged to sense fluid within the inlet (26).

2. The apparatus of claim 1, wherein the first fluid driver (38A) and the second fluid driver (38B) each comprises a resistor, wherein actuation of the resistor causes the resistor to heat and vaporize adjacent fluid to create a bubble, wherein given a spacing between the first fluid driver (38A) and the second fluid driver (38B), the controller is to sequentially actuate the first fluid driver (38A) and the second fluid driver (38B) such that an expanding bubble from actuation of the first fluid driver (38A) does not intersect an expanding bubble from actuation of the second fluid driver (38B).

3. The apparatus of claim 1 , wherein actuation of the first fluid driver (38A) creates a positive pressure during a first time in a first region within the chamber proximate to the first nozzle (36A) to push fluid through the first nozzle (36A) followed by a negative pressure during a second time in the region to draw fluid to the first region, wherein actuation of the second fluid driver (38B) creates a positive pressure during a third time in a second region within the chamber proximate to the second nozzle (36B) to push fluid through the second nozzle (36B) followed by a negative pressure during a fourth time in the second region to draw fluid to the second region and wherein the controller (40) is to sequentially actuate the second fluid driver following actuation of the first fluid driver (38A) following an end of the first time and before expiration of the second time.

4. The apparatus of claim 3, wherein the first fluid driver (38A) comprises a resistor, wherein actuation of the resistor causes the resistor to heat and vaporize adjacent fluid to create an expanding bubble to create the positive pressure during the first time, whereupon collapse of the bubble creates the negative pressure during the second time.

5. The apparatus of claim 1, wherein the first fluid driver (38A) and the second fluid driver (38B) each comprise a resistor.

6. The apparatus of claim 1, further comprising: a second inlet connecting the microfluidic passage (24) to the chamber (34); and a second sensor proximate to the second inlet to sense fluid within the second inlet.

7. The apparatus of claim 1, wherein the first nozzle (36A) and the second nozzle (36B) are located on opposite ends of the chamber (34) and wherein the inlet (26) connects to a middle portion of the chamber.

8. The apparatus of claim 1, wherein the first nozzle (36A) and the second nozzle 36B) are part of a row of at least three nozzles within the chamber (34) and wherein the first fluid driver and the second fluid driver (38) are part of a row of at least three independently actuatable fluid drivers corresponding to the at least three nozzles.

9. The apparatus of claim 1 further comprising a universal serial bus connector, wherein the first fluid driver (38A) and the second fluid driver (38B) receive all power through the universal serial bus connector.

10. The apparatus of claim 1, wherein the chamber (34) is funnel-shaped between the inlet and the first nozzle (36A) and the second nozzle (36B).

11. A method of operating an apparatus of any preceding claim, the method comprising:
actuating the first fluid driver (38A) within the chamber (34) to expel fluid through the first nozzle (36A) from the chamber (34) and to draw fluid across the sensor;
actuating the second fluid driver (38B) within the chamber (34), sequentially following actuation of the first fluid driver (38A), to expel fluid through the second nozzle (36B) from the chamber (34) to draw fluid across the sensor; and
sensing fluid being drawn across the sensor.

12. The method of claim 11, wherein actuation of the first fluid driver (38A) creates a positive pressure during a first time in a first region within the chamber (34) proximate to the first nozzle to push fluid through the first nozzle (36A) followed by a negative pressure during a second time in the region to draw fluid to the first region, wherein actuation of the second fluid driver (38B) creates a positive pressure during a third time in a second region within the chamber proximate to the second nozzle (36B) to push fluid through the second nozzle (36B) followed by a negative pressure during a fourth time in the second region to draw fluid to the second region and wherein the controller (40) is to sequentially actuate the second fluid driver (38B) following actuation of the first fluid driver (38A) following an end of the first time and before expiration of the second time.

## Patentansprüche

1. Vorrichtung, die Folgendes umfasst:
einen Mikrofluiddurchlass (24);
eine Kammer (34), die eine erste Düse (36A), eine zweite Düse (36B), einen ersten Fluidantrieb (38A) und einen zweiten Fluidantrieb (38B) umfasst;
einen Einlass (26), der den Mikrofluiddurchlass (24) mit der Kammer (34) verbindet;
wobei der erste Fluidantrieb (38A) dazu angeordnet ist, Fluid durch die erste Düse (36A) zu bewegen, um Fluid über den Einlass (26) hinweg zu ziehen;
wobei der zweite Fluidantrieb (38B) dazu angeordnet ist, Fluid durch die zweite Düse (36B) zu bewegen, um Fluid über den Einlass (26) hinweg zu ziehen; und
eine Steuerung (40), um den ersten Fluidantrieb (38A) und den zweiten Fluidantrieb (38B) zu betätigen;
wobei die Düsen (36A, 36B) aneinander angrenzen und mit der Kammer (34) verbunden sind, wobei jede Düse (36A, 36B) eine Öffnung umfasst, durch die Fluid in der Kammer (34) ausgestoßen werden kann;
**dadurch gekennzeichnet, dass**
die Steuerung (40) dazu angeordnet ist, den ersten Fluidantrieb (38A) und den zweiten Fluidantrieb (38B) nacheinander zu betätigen; und
einen Sensor (30) in der Nähe des Einlasses (26), der dazu angeordnet ist, Fluid in dem Einlass (26) zu erfassen.

2. Vorrichtung nach Anspruch 1, wobei der erste Fluidantrieb (38A) und der zweite Fluidantrieb (38B) jeweils einen Widerstand umfassen, wobei eine Betätigung des Widerstands den Widerstand dazu veranlasst, sich zu erwärmen und angrenzendes Fluid zu verdampfen, um eine Blase zu erzeugen, wobei, vorausgesetzt, dass ein Abstand zwischen dem ersten Fluidantrieb (38A) und dem zweiten Fluidantrieb (38B) besteht, die Steuerung den ersten Fluidantrieb (38A) und den zweiten Fluidantrieb (38B) nacheinander derart betätigt, dass eine sich ausdehnende Blase aus der Betätigung des ersten Fluidantriebs (38A) eine sich ausdehnende Blase aus der Betätigung des zweiten Fluidantriebs (38B) nicht schneidet.

3. Vorrichtung nach Anspruch 1, wobei die Betätigung des ersten Fluidantriebs (38A) während eines ersten Males in einem ersten Bereich in der Kammer in der Nähe der ersten Düse (36A) einen Überdruck erzeugt, um Fluid durch die erste Düse (36A) zu drücken, gefolgt von einem Unterdruck während eines zweiten Males in dem Bereich, um Fluid in den ersten Bereich zu ziehen, wobei die Betätigung des zweiten Fluidantriebs (38B) während eines dritten Males in einem zweiten Bereich einen Überdruck in der Kammer in der Nähe der zweiten Düse (36B) erzeugt, um Fluid durch die zweite Düse (36B) zu drücken, gefolgt von einem Unterdruck während eines vierten Males in dem zweiten Bereich, um Fluid in den zweiten Bereich zu ziehen, und wobei die Steuerung (40) den zweiten Fluidantrieb nach Betätigung des ersten Fluidantriebs (38A) nach einem Ende des ersten Males und vor Ablauf des zweiten Males nacheinander betätigt.

4. Vorrichtung nach Anspruch 3, wobei der erste Fluidantrieb (38A) einen Widerstand umfasst, wobei die Betätigung des Widerstands den Widerstand dazu veranlasst, sich zu erwärmen und angrenzendes Fluid zu verdampfen, um eine sich ausdehnende Blase zu erzeugen, um den Überdruck während des ersten Males zu erzeugen, woraufhin ein Zusammenfall der Blase den Unterdruck während des zweiten Males erzeugt.

5. Vorrichtung nach Anspruch 1, wobei der erste Fluidantrieb (38A) und der zweite Fluidantrieb (38B) jeweils einen Widerstand umfassen.

6. Vorrichtung nach Anspruch 1, die ferner Folgendes umfasst:
einen zweiten Einlass, der den Mikrofluiddurchlass (24) mit der Kammer (34) verbindet; und
einen zweiten Sensor in der Nähe des zweiten Einlasses, um Fluid in dem zweiten Einlass zu erfassen.

7. Vorrichtung nach Anspruch 1, wobei sich die erste Düse (36A) und die zweite Düse (36B) an gegenüberliegenden Enden der Kammer (34) befinden und wobei der Einlass (26) mit einem mittleren Abschnitt der Kammer verbunden ist.

8. Vorrichtung nach Anspruch 1, wobei die erste Düse (36A) und die zweite Düse (36B) Teil einer Reihe von wenigstens drei Düsen in der Kammer (34) sind und wobei der erste Fluidantrieb und der zweite Fluidantrieb (38) Teil einer Reihe von wenigstens drei unabhängig betätigbaren Fluidantrieben sind, die den wenigstens drei Düsen entsprechen.

9. Vorrichtung nach Anspruch 1, die ferner einen Universal-Serial-Bus-Verbinder umfasst, wobei der erste Fluidantrieb (38A) und der zweite Fluidantrieb (38B) die gesamte Leistung über den Universal-Serial-Bus-Verbinder erhalten.

10. Vorrichtung nach Anspruch 1, wobei die Kammer (34) trichterförmig zwischen dem Einlass und der ersten Düse (36A) und der zweiten Düse (36B) ist.

11. Verfahren zum Betreiben einer Vorrichtung nach einem der vorhergehenden Ansprüche, wobei das Verfahren Folgendes umfasst:
Betätigen des ersten Fluidantriebs (38A) in der Kammer (34), um Fluid durch die erste Düse (36A) aus der Kammer (34) auszutreiben und Fluid über den Sensor hinweg zu ziehen;
Betätigen des zweiten Fluidantriebs (38B) in der Kammer (34) nacheinander nach Betätigung des ersten Fluidantriebs (38A), um Fluid durch die zweite Düse (36B) aus der Kammer (34) auszutreiben, um Fluid über den Sensor hinweg zu ziehen; und
Erfassen, dass Fluid über den Sensor hinweg gezogen wird.

12. Verfahren nach Anspruch 11, wobei die Betätigung des ersten Fluidantriebs (38A) während eines ersten Males in einem ersten Bereich in der Kammer (34) in der Nähe der ersten Düse einen Überdruck erzeugt, um Fluid durch die erste Düse (36A) zu drücken, gefolgt von einem Unterdruck während eines zweiten Males in dem Bereich, um Fluid in den ersten Bereich zu ziehen, wobei die Betätigung des zweiten Fluidantriebs (38B) während eines dritten Males einen Überdruck in einem zweiten Bereich in der Kammer in der Nähe der zweiten Düse (36B) erzeugt, um Fluid durch die zweite Düse (36B) zu drücken, gefolgt von einem Unterdruck während eines vierten Males in dem zweiten Bereich, um Fluid in den zweiten Bereich zu ziehen, und wobei die Steuerung (40) den zweiten Fluidantrieb (38B) nach Betätigung des ersten Fluidantriebs (38A) nach einem Ende des ersten Males und vor Ablauf des zweiten Males nacheinander betätigt.

## Revendications

1. Appareil comprenant :
un passage microfluidique (24) ;
une chambre (34) comprenant une première buse (36A), une seconde buse (36B), un premier dispositif d'entraînement de fluide (38A) et un second dispositif d'entraînement de fluide (38B) ;
une entrée (26) reliant le passage microfluidique (24) à la chambre (34) ;
le premier dispositif d'entraînement de fluide (38A) étant agencé pour déplacer le fluide à travers la première buse (36A) afin d'attirer le fluide à travers l'entrée (26) ;
le second dispositif d'entraînement de fluide (38B) étant agencé pour déplacer le fluide à travers la seconde buse (36B) afin d'attirer du fluide à travers l'entrée (26) ; et
un dispositif de commande (40) pour actionner le premier dispositif d'entraînement de fluide (38A) et le second dispositif d'entraînement de fluide (38B) ;
les buses (36A, 36B) étant adjacentes les unes aux autres et étant reliées à la chambre (34), chaque buse (36A, 36B) comprenant une ouverture à travers laquelle le fluide à l'intérieur de la chambre (34) peut être éjecté ;
**caractérisé en ce que**
le dispositif de commande (40) est agencé pour actionner séquentiellement le premier dispositif d'entraînement de fluide (38A) et le second dispositif d'entraînement de fluide (38B) ; et
un capteur (30), à proximité de l'entrée (26), agencé pour détecter le fluide à l'intérieur de l'entrée (26).

2. Appareil selon la revendication 1, le premier dispositif d'entraînement de fluide (38A) et le second dispositif d'entraînement de fluide (38B) comprenant chacun une résistance, l'actionnement de la résistance amenant la résistance à chauffer et à vaporiser le fluide adjacent pour créer une bulle, étant donné un espacement entre le premier dispositif d'entraînement de fluide (38A) et le second dispositif d'entraînement de fluide (38B), le dispositif de commande devant actionner séquentiellement le premier dispositif d'entraînement de fluide (38A) et le second dispositif d'entraînement de fluide (38B) de telle sorte qu'une bulle se dilatant à partir de l'actionnement du premier dispositif d'entraînement de fluide (38A) ne coupe pas une bulle en expansion à partir de l'actionnement du second dispositif d'entraînement de fluide (38B).

3. Appareil selon la revendication 1, l'actionnement du premier dispositif d'entraînement de fluide (38A) créant une pression positive pendant un premier temps dans une première région à l'intérieur de la chambre à proximité de la première buse (36A) pour pousser le fluide à travers la première buse (36A) suivie par une pression négative pendant un deuxième temps dans la région pour attirer le fluide vers la première région, l'actionnement du second dispositif d'entraînement de fluide (38B) créant une pression positive pendant un troisième temps dans une seconde région à l'intérieur de la chambre à proximité de la seconde buse (36B) pour pousser le fluide à travers la seconde buse (36B) suivie d'une pression négative pendant un quatrième temps dans la seconde région pour attirer le fluide vers la seconde région et le dispositif de commande (40) devant actionner séquentiellement le second dispositif d'entraînement de fluide suivant l'actionnement du premier dispositif d'entraînement de fluide (38A) à la fin du premier temps et avant l'expiration du second temps.

4. Appareil selon la revendication 3, le premier dispositif d'entraînement de fluide (38A) comprenant une résistance, l'actionnement de la résistance amenant la résistance à chauffer et à vaporiser le fluide adjacent pour créer une bulle en expansion afin de créer la pression positive pendant le premier temps, après quoi l'effondrement de la bulle crée la pression négative pendant le deuxième temps.

5. Appareil selon la revendication 1, le premier dispositif d'entraînement de fluide (38A) et le second dispositif d'entraînement de fluide (38B) comprenant chacun une résistance.

6. Appareil selon la revendication 1, comprenant en outre :
une seconde entrée reliant le passage microfluidique (24) à la chambre (34) ; et
un second capteur à proximité de la seconde entrée pour détecter le fluide à l'intérieur de la seconde entrée.

7. Appareil selon la revendication 1, la première buse (36A) et la seconde buse (36B) étant situées sur des extrémités opposées de la chambre (34) et l'entrée (26) se reliant à une partie médiane de la chambre.

8. Appareil selon la revendication 1, la première buse (36A) et la seconde buse (36B) faisant partie d'une rangée d'au moins trois buses à l'intérieur de la chambre (34) et le premier dispositif d'entraînement de fluide et le second dispositif d'entraînement de fluide (38) faisant partie d'une rangée d'au moins trois dispositif d'entraînement de fluide actionnables indépendamment correspondant aux au moins trois buses.

9. Appareil selon la revendication 1, comprenant en outre un connecteur de bus série universel, le premier dispositif d'entraînement de fluide (38A) et le second dispositif d'entraînement de fluide (38B) recevant toute l'alimentation par l'intermédiaire du connecteur de bus série universel.

10. Appareil selon la revendication 1, la chambre (34) étant en forme d'entonnoir entre l'entrée et la première buse (36A) et la seconde buse (36B).

11. Procédé de fonctionnement d'un appareil selon l'une quelconque des revendications précédentes, le procédé comprenant :
l'actionnement du premier dispositif d'entraînement de fluide (38A) à l'intérieur de la chambre (34) pour expulser le fluide à travers la première buse (36A) de la chambre (34) et pour attirer le fluide à travers le capteur ;
l'actionnement du second dispositif d'entraînement de fluide (38B) à l'intérieur de la chambre (34), séquentiellement après l'actionnement du premier dispositif d'entraînement de fluide (38A), pour expulser le fluide à travers la seconde buse (36B) de la chambre (34) pour attirer le fluide à travers le capteur ; et
la détection du fluide aspiré à travers le capteur.

12. Procédé selon la revendication 11, l'actionnement du premier dispositif d'entraînement de fluide (38A) créant une pression positive pendant un premier temps dans une première région à l'intérieur de la chambre (34) à proximité de la première buse pour pousser le fluide à travers la première buse (36A) suivie par une pression négative pendant un deuxième temps dans la région pour attirer le fluide vers la première région, l'actionnement du second dispositif d'entraînement de fluide (38B) créant une pression positive pendant un troisième temps dans une seconde région à l'intérieur de la chambre à proximité de la seconde buse (36B) pour pousser le fluide à travers la seconde buse (36B) suivie d'une pression négative pendant un quatrième temps dans la seconde région pour attirer le fluide vers la seconde région et le dispositif de commande (40) devant actionner séquentiellement le second dispositif d'entraînement de fluide (38B) après l'actionnement du premier dispositif d'entraînement de fluide (38A) à la fin du premier temps et avant l'expiration du deuxième temps.
